# DEMANDE DE BREVET EUROPEEN

(11) **EP 4 108 522 A1**
(43) Date de publication de la demande: **28.12.2022**
(21) Numéro de dépôt: 22181062.5
(22) Date de dépôt: 24.06.2022
(51) Int. Cl.: B60N 3/02

(54) **DISPOSITIF ÉLECTRONIQUE DE CHARGEMENT ÉLECTRIQUE D'AU MOINS UN APPAREIL ÉLECTRONIQUE, ENSEMBLE D ÉQUIPEMENTS POUR UN VÉHICULE DE TRANSPORT ET VÉHICULE DE TRANSPORT ASSOCIÉS**

(30) Priorité: 25.06.2021 FR 2106810
(71) Demandeur: ALSTOM Holdings, 93400 Saint-Ouen-sur-Seine (FR)
(72) Inventeur: VIDAL, Guillaume, 17230 VILLEDOUX (FR)
(74) Mandataire: Lavoix

(57) **Abrégé**

La présente invention concerne un dispositif électronique (20) de chargement électrique d'au moins un appareil électronique (10). Le dispositif (20) est destiné à équiper un véhicule de transport comportant au moins une barre de maintien (15).

Le dispositif (20) est configuré pour être fixé à la barre de maintien (15) et comporte un module de chargement (70) de l'au moins un appareil électronique (10),

Le module de chargement (70) est un module de chargement par induction configuré pour charger par induction magnétique l'au moins un appareil électronique (10).

## Description

La présente invention concerne un dispositif électronique de chargement électrique d'au moins un appareil électronique, le dispositif étant destiné à équiper un véhicule de transport.

La présente invention concerne également un ensemble d'équipements pour un véhicule de transport, comprenant une barre de maintien et un tel dispositif électronique de chargement.

La présente invention concerne en outre un véhicule de transport, notamment ferroviaire, comprenant au moins un tel ensemble d'équipements.

L'invention concerne le domaine du transport, et notamment du transport ferroviaire, d'utilisateur(s) muni(s) d'appareil(s) électronique(s).

On connaît du document EP 3 244 508 A1 un dispositif électronique de chargement électrique d'au moins un appareil électronique. Le dispositif est destiné à équiper un véhicule ferroviaire de transport. Plus particulièrement, le dispositif est apte à être fixé à une barre de maintien du véhicule, et comprend deux prises femelles USB configurées pour être connectées à un appareil électronique via un câble USB. Ainsi, le dispositif électronique de chargement électrique permet, via le câble, de charger l'appareil électronique.

Cependant, un tel rechargement de l'appareil électronique n'est pas toujours aisé.

L'invention a donc pour but de proposer un dispositif de chargement, un ensemble d'équipements pour un véhicule de transport et un véhicule de transport, améliorant l'ergonomie du chargement électrique d'un appareil électronique appartenant à un utilisateur du véhicule de transport.

A cet effet, l'invention a pour objet un dispositif électronique de chargement électrique d'au moins un appareil électronique, le dispositif étant destiné à équiper un véhicule de transport comportant au moins une barre de maintien, le dispositif étant configuré pour être fixé à la barre de maintien et comportant un module de chargement de l'au moins un appareil électronique, dans lequel le module de chargement est un module de chargement par induction configuré pour charger par induction magnétique l'au moins un appareil électronique.

Le module de chargement par induction permet à l'utilisateur de charger son appareil électronique sans qu'un câble soit nécessaire. Ainsi, l'utilisateur n'a pas besoin de prévoir, en amont de son voyage dans le véhicule de transport, qu'il aura besoin de charger son appareil électronique, et donc de prendre un câble.

L'ergonomie de chargement de l'appareil électronique est alors améliorée.

Suivant d'autres aspects avantageux de l'invention, le dispositif électronique de chargement électrique comprend une ou plusieurs des caractéristiques suivantes, prises isolément ou suivant toutes les combinaisons techniquement possibles :
- le dispositif comprend en outre des moyens de préhension adaptés pour être saisis par une main d'un utilisateur lorsque l'appareil électronique est disposé entre le dispositif et ladite main ;
- le dispositif est adapté pour être fixé à la barre de maintien via une face de support opposée à une face de chargement par induction, et les moyens de préhension sont des faces latérales du dispositif reliant la face de support à la face de chargement, les moyens de préhension définissant une géométrie évasée en s'éloignant de la face de support ;
- les moyens de préhension comportent au moins une rainure propre à recevoir au moins partiellement la main de l'utilisateur ;
- le dispositif comprend en outre une butée de positionnement de l'appareil électronique ;
- la butée de positionnement est une butée de positionnement vertical de l'appareil électronique ;
- la butée de positionnement vertical s'étend le long d'un bord inférieur d'une face de chargement par induction lorsque le dispositif est fixé à la barre de maintien ; et
- le dispositif comprend en outre un aimant de positionnement de l'appareil électronique par rapport à une bobine électromagnétique d'émission d'un champ électromagnétique du module de chargement par induction.

L'invention a également pour objet un ensemble d'équipements pour un véhicule de transport, comprenant une barre de maintien et un tel dispositif électronique de chargement électrique d'au moins un appareil électronique.

L'invention a en outre pour objet un véhicule de transport notamment ferroviaire, comprenant au moins un tel ensemble d'équipements.

Ces caractéristiques et avantages de l'invention apparaîtront plus clairement à la lecture de la description qui va suivre, donnée uniquement à titre d'exemple non limitatif et faite en référence aux dessins annexés, sur lesquels :
[Fig. 1] la figure 1 est une vue schématique en perspective d'un dispositif électronique de chargement électrique, fixé à une barre de maintien d'un véhicule de transport ; et
[Fig. 2] la figure 2 est une vue en coupe selon un plan transversal perpendiculaire à une direction longitudinale, du dispositif de chargement de la figure 1, fixé à la barre de maintien également de la figure 1.

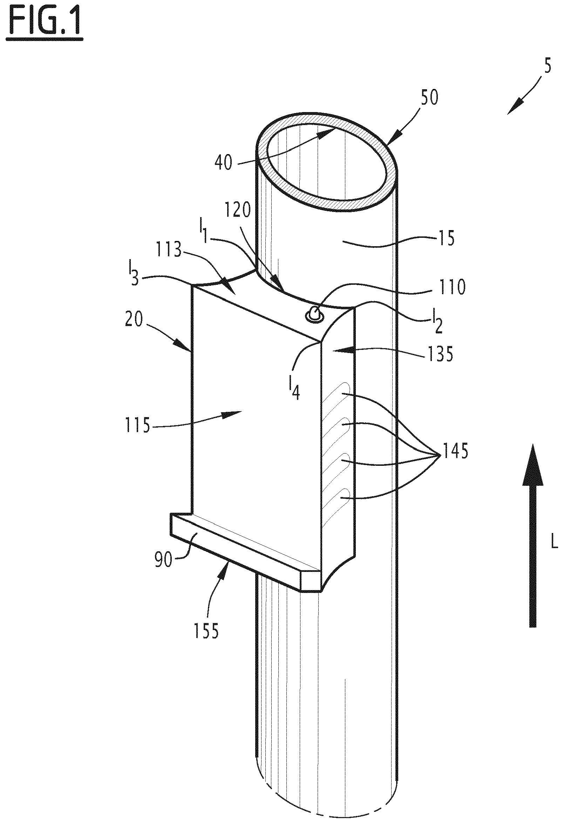

Sur la figure 1, un ensemble d'équipements 5 est destiné à équiper un véhicule de transport non représenté. Le véhicule est par exemple un véhicule ferroviaire, notamment un train, un tramway ou un métro. En variante, le véhicule est un véhicule routier, tel qu'un bus. L'ensemble d'équipements 5 est propre à charger un appareil électronique 10 d'un utilisateur, tout en permettant à l'utilisateur de stabiliser sa position lors du transport.

L'ensemble 5 comporte une barre de maintien 15, configurée pour être tenue par un utilisateur en position debout afin de lui apporter de la stabilité, et un dispositif électronique 20 de chargement de l'appareil électronique 10.

L'appareil électronique 10 est par exemple un téléphone mobile, et notamment un ordiphone (de l'anglais *smartphone*), une tablette, une montre ou un lecteur de musique portatif. L'appareil électronique 10 comprend une batterie rechargeable 25 configurée pour alimenter électriquement d'autres composants de l'appareil électronique 20, une bobine électromagnétique 30 de réception d'un champ électromagnétique configurée pour convertir le champ reçu en un courant électrique de rechargement de la batterie 25, et optionnellement un module de positionnement 35, dont le fonctionnement est décrit ci-après.

La barre de maintien 15 s'étend selon une direction longitudinale L, par exemple verticale. En variante, lorsque la barre de maintien 15 est horizontale ou oblique, la direction longitudinale L s'étend horizontalement ou de manière oblique. La barre 15 est de section circulaire. En variante, la section de la barre 15 est ovale ou parallélépipédique, notamment rectangulaire.

La barre 15 est de préférence creuse, comprenant ainsi une surface interne 40 délimitant un volume interne 45, et une surface externe 50.

La barre 15 comprend en outre un passage 55 la traversant de la surface interne 40 à la surface externe 50. Le passage 55 est traversé par un câble 60 d'alimentation du dispositif de chargement 20, le câble 60 s'étendant principalement dans le volume interne 45. Le câble 60 est relié à un dispositif de fourniture d'énergie électrique (non représenté) inclus dans le véhicule, et est configuré pour être connecté au dispositif de chargement 20 afin de l'alimenter en énergie électrique.

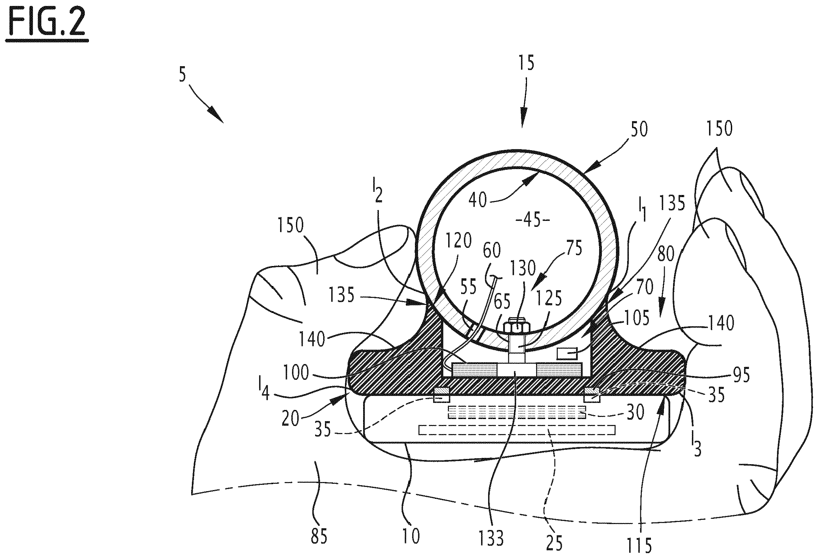

La barre 15 comprend en outre un trou 65 configuré pour fixer le dispositif de chargement 20 à la barre 15. Comme représenté sur la figure 2, le passage 55 et le trou 65 sont par exemple compris dans un même plan de coupe transversal, perpendiculaire à la direction longitudinale L.

Le dispositif de chargement 20 comprend un module de chargement par induction 70, des moyens de fixation 75, et optionnellement des moyens de préhension 80 par une main 85 de l'utilisateur, une butée 90 de positionnement de l'appareil 10, et un aimant 95 de positionnement de l'appareil 10.

Le module de chargement par induction 70 comprend une bobine électromagnétique 100 d'émission du champ électromagnétique, et optionnellement une unité de détection 105 et une diode électroluminescente 110.

La bobine d'émission 100 est configurée pour être reliée électroniquement au câble d'alimentation 60. La bobine d'émission 100 est configurée pour, lorsqu'elle est alimentée en énergie électrique, via le câble d'alimentation 60, générer le champ électromagnétique. La bobine d'émission 100 est destinée à coopérer avec la bobine électromagnétique de réception 30 pour le chargement de l'appareil 10. Plus spécifiquement, le dispositif de chargement 20 comprend une face de chargement par induction 115 préférentiellement plane, telle que, lorsque l'appareil 10 est positionné contre la face de chargement 115, les bobines d'émission 100 et de réception 30 sont couplées, et de préférence alignées, c'est-à-dire coaxiales. Dans une telle position, dite de chargement, le champ électromagnétique généré par la bobine d'émission 100 traverse la bobine de réception 30.

L'unité de détection 105 est connectée à la bobine d'émission 100, et est configurée pour détecter le couplage entre la bobine d'émission 100 et la bobine de réception 30 selon une technique connue en soi. L'unité de détection 105 est en outre configurée pour, en cas de détection du couplage entre les bobines 100, 30, envoyer à la diode 110, un signal d'allumage. L'unité de détection 105 est également configurée pour, en cas de détection d'un découplage des bobines d'émission 100 et de réception 30, envoyer à la diode 110, un signal d'extinction. Le découplage est entendu ici au sens d'une interruption du couplage.

La diode électroluminescente 110 est préférentiellement située sur une face extérieure 113 du dispositif de chargement 20 de sorte à pouvoir être visible par l'utilisateur. La diode 110 est configurée pour s'allumer lorsqu'elle reçoit, depuis l'unité de détection 105, le signal d'allumage, et pour s'éteindre lorsqu'elle reçoit, depuis l'unité de détection 105, le signal d'extinction. Ainsi, lorsque la diode 110 est allumée, l'utilisateur est visuellement informé que l'appareil 10 est en cours de chargement puisque les bobines d'émission 100 et de réception 30 sont couplées.

Les moyens de fixation 75 permettent la fixation du dispositif de chargement 20 à la barre 15, via une face de support 120 opposée à la face de chargement 115. La face de support 120 est optionnellement en forme de gouttière pour coopérer avec la surface externe 50 de la barre 15.

Les moyens de fixation 75 comprennent par exemple un boulon, le boulon comportant une vis 125 propre à traverser la barre de maintien 15 et la face de support 120, et un écrou 130, auquel la vis 125 est destinée à être vissée. La vis 125 comporte une tête de vis 133 logée dans le dispositif de chargement 20. Lorsque le dispositif de chargement 20 est fixé à la barre 15, la vis 125 traverse le trou 65, et est vissée à l'écrou 130 dans le volume interne 45. Lorsque le dispositif de chargement 20 est fixé à la barre 15, l'écrou 130 est en appui contre la surface interne 40 de la barre 15.

En variante non représentée, la vis 125 est remplacée par une tige filetée et la tête de vis 133 est remplacée par un autre écrou.

En variante encore, la face de support 120 est destinée à être collée, ou soudée, à la surface externe 50 de la barre 15.

Les moyens de préhension 80 sont adaptés pour être saisis par la main 85 de l'utilisateur, notamment lorsque l'appareil électronique 10 est disposé entre le dispositif 20 et ladite main 85. Ainsi, dans la position de chargement, l'appareil 10 est maintenu, par la main 85, contre la face de chargement par induction 115. Les moyens de préhension 80 sont des faces latérales 135 du dispositif de chargement 20 joignant les faces de chargement 115 et de support 120.

Les moyens de préhension 80 définissent une géométrie évasée en s'éloignant de la face de support 120. Autrement dit, le dispositif de chargement 20 comprend une première intersection I₁ dans le plan transversal de la figure 2, entre une première des deux faces latérales 135 et la face de support 120. Le dispositif de chargement 20 comprend en outre une deuxième intersection I₂ dans ce même plan, entre la deuxième face latérale 135 et la face de support 120. Le dispositif de chargement 20 comprend aussi une troisième intersection I₃ dans ce même plan, entre la première face latérale 135 et la face de chargement 115. Le dispositif de chargement 20 comprend également une quatrième intersection I₄ dans ce même plan, entre la deuxième face latérale 135 et la face de chargement 115. Ainsi, un premier segment reliant les première I₁ et deuxième I₂ intersections est plus court qu'un deuxième segment reliant les troisième I₃ et quatrième I₄ intersections.

En complément facultatif, les moyens de préhension 80 comportent en outre au moins une rainure 140, 145 propre à recevoir au moins partiellement la main 85 de l'utilisateur, en particulier des doigts de la main 85, de préférence des doigts autres que le pouce. De manière préférentielle, les moyens de préhension 80 comportent deux rainures de rétention 140 et huit rainures de guidage 145.

Les rainures de rétention 140 sont chacune formées sur une des faces latérales 135. Chaque rainure de rétention 140 est un creux défini dans une des faces latérales 135 et s'étendant longitudinalement sur toute la hauteur du dispositif de chargement 20. Les rainures de rétention 140 sont configurées pour, en position de chargement, recevoir des phalanges distales 150 de la main 85. Ainsi, en position de chargement, la rainure de rétention 140 de l'une des faces latérales 135 est configurée pour recevoir les phalanges distales 150 de l'index, du majeur, de l'annulaire, et de l'auriculaire de la main 85, alors que la rainure de rétention 140 de l'autre face latérale 135 est configurée pour recevoir la phalange distale 150 du pouce de la main 85. En position de chargement, la main 85 forme alors une pince enserrant l'appareil 10 et la face de chargement 115. Les rainures de rétention 140 visent à limiter un glissement de la main 85 des faces latérales 135 selon une direction perpendiculaire à la direction longitudinale L. Un tel glissement conduirait à ne plus maintenir l'appareil 10 contre la face de chargement 115.

Les rainures de guidage 145 sont réparties sur chaque face latérale 135. Chaque face latérale 135 comporte par exemple quatre rainures de guidage 145. Chaque rainure de guidage 145 est un creux dans une face latérale 135 respective, en forme de gouttière s'étendant perpendiculairement à la direction longitudinale L. Les rainures de guidage 135 sont configurées pour guider les doigts de la main 85 en position de chargement. En position de chargement, chaque doigt de la main 85 est positionné le long d'une des rainures de guidage 145. Les rainures de guidage 145 visent à éviter un glissement longitudinal de la main 85.

La butée de positionnement 90 s'étend le long d'un bord commun entre la face de chargement 115 et une face inférieure 155 du dispositif de chargement 20. La butée 90 fait saillie par rapport à la face de chargement 115 de sorte qu'en position de chargement, la butée 90 s'étend depuis la face de chargement 115 vers la main 85.

Comme représenté sur la figure 1, lorsque le dispositif de chargement 20 est destiné à être fixé à une barre 15 respective verticale, la face inférieure 155 est une face orientée vers un plancher du véhicule et liant la face de chargement 115, la face de support 120 et chacune des faces latérales 135.

En variante non représentée, lorsque le dispositif de chargement 20 est destiné à être fixé à une barre 15 respective horizontale, la face inférieure 155 est une des faces latérales 135, orientée vers le plancher du véhicule.

L'aimant de positionnement 95 est configuré pour coopérer avec le module de positionnement 35 de l'appareil 10. L'aimant de positionnement 95 est sensiblement circulaire et coaxial de la bobine d'émission 100. Il a un diamètre supérieur à celui de la bobine d'émission 100 et une géométrie similaire à celle du module de positionnement 35.

Le module de positionnement 35 est composé d'un matériau magnétique propre à être attiré par l'aimant de positionnement 95. Ainsi, en position de chargement, le module de positionnement 35 s'aligne naturellement avec l'aimant de positionnement 95. Le module de positionnement 35 a, similairement à l'aimant de positionnement 95, un diamètre supérieur à celui de la bobine de réception 30. Ainsi, en position de chargement, l'aimant de positionnement 95 étant aligné avec le module de positionnement 35, les bobines d'émission 100 et de réception 30 sont mieux alignées pour offrir un meilleur couplage électromagnétique. En outre, l'aimant de positionnement 95 participe au maintien de l'appareil électronique 10 contre la face de chargement 115, même lorsque la main 85 n'exerce pas de force pour maintenir l'appareil 10 contre la face de chargement 115.

En fonctionnement, l'utilisateur embarque dans le véhicule muni de l'ensemble d'équipements 5. Initialement, la bobine d'émission 100 est alimentée en énergie électrique par le véhicule, via le câble d'alimentation 60. Le courant électrique parcourt la bobine d'émission 100 générant le champ électromagnétique à travers la face de chargement 115.

L'utilisateur, désirant charger son appareil électronique 10, le saisit dans la paume de sa main 85 et le positionne contre la face de chargement 115 du dispositif de chargement 20. Lors de ce positionnement, le module de positionnement 35 est optionnellement attiré par l'aimant de positionnement 95 pour positionner l'appareil 10 contre la face de chargement 115, couplant ainsi mieux les bobines d'émission 100 et de réception 30.

En outre, lors du positionnement de l'appareil 10 contre la face de chargement 115, les doigts de la main 85 de l'utilisateur sont optionnellement guidés par les rainures de guidage 145. Les phalanges distales 150 sont reçues dans les rainures de rétention 140 des moyens de préhension 80.

Une fois l'appareil 10 contre la face de chargement 115, il est en position de chargement. La bobine de réception 30 est alors traversée par le champ électromagnétique généré par la bobine d'émission 100, et convertit ce champ électromagnétique reçu en énergie électrique pour alimenter la batterie 25 de l'appareil électronique 10. Optionnellement, l'unité de détection 105 détecte alors le couplage entre les bobines de réception 30 et d'émission 100 et envoie à la diode 110 le signal d'allumage. La diode 110 s'allume indiquant à l'utilisateur que l'appareil électronique 10 est en cours de chargement.

Dans la position de chargement, l'appareil 10 repose en outre de préférence contre la butée de positionnement 95.

Ainsi, le dispositif de chargement 20 permet à l'utilisateur de charger son appareil 10 sans recourir à un câble entre le dispositif de chargement 20 et l'appareil 10.

En outre, grâce aux moyens de préhension 80 optionnels, l'utilisateur bénéficie du chargement de son appareil électronique 10, tout en se maintenant à la barre de maintien 15, assurant ainsi sa sécurité en cas de secousse du véhicule.

On comprend en outre que les rainures de rétention 140, facultatives, permettent à l'utilisateur de bien enserrer son appareil électronique 10 contre le dispositif de chargement 20, afin d'éviter qu'il ne lui échappe de la main 85.

La butée de positionnement 90 ainsi que l'aimant de positionnement 95, optionnels, permettent en outre de limiter un glissement de l'appareil 10 entre la main 85 et la face de chargement 115, en position de chargement.

En outre, l'aimant de positionnement 95 permet d'assurer un bon couplage électromagnétique entre la bobine d'émission 100 et la bobine de réception 30, améliorant ainsi la qualité et l'efficacité du chargement de l'appareil 10.

Finalement, la diode 110 et l'unité de détection 105, eux aussi optionnels, permettent à l'utilisateur de contrôler visuellement si son appareil électronique 10 est bien en cours de chargement.

## Revendications

1. Dispositif électronique (20) de chargement électrique d'au moins un appareil électronique (10), le dispositif (20) étant destiné à équiper un véhicule de transport comportant au moins une barre de maintien (15), le dispositif (20) étant configuré pour être fixé à la barre de maintien (15) et comportant un module de chargement (70) de l'au moins un appareil électronique (10),
**caractérisé en ce que** le module de chargement (70) est un module de chargement par induction configuré pour charger par induction magnétique l'au moins un appareil électronique (10),
le dispositif électronique (20) comprenant en outre des moyens de préhension (80) adaptés pour être saisis par une main (85) d'un utilisateur lorsque l'appareil électronique (10) est disposé entre le dispositif (20) et ladite main (85).

2. Dispositif (20) selon la revendication 1, dans lequel le dispositif (20) est adapté pour être fixé à la barre de maintien (15) via une face de support (120) opposée à une face de chargement par induction (115), et dans lequel les moyens de préhension (80) sont des faces latérales (135) du dispositif (20) reliant la face de support (120) à la face de chargement (115), les moyens de préhension (80) définissant une géométrie évasée en s'éloignant de la face de support (120).

3. Dispositif (20) selon la revendication 1 ou 2, dans lequel les moyens de préhension (80) comportent au moins une rainure (140, 145) propre à recevoir au moins partiellement la main (85) de l'utilisateur.

4. Dispositif (20) selon l'une quelconque des revendications précédentes, comprenant en outre une butée (90) de positionnement de l'appareil électronique (10).

5. Dispositif (20) selon la revendication précédente, dans lequel la butée de positionnement (90) est une butée de positionnement vertical de l'appareil électronique (10).

6. Dispositif (20) selon la revendication précédente, dans lequel la butée de positionnement (90) vertical s'étend le long d'un bord inférieur d'une face de chargement par (115) induction lorsque le dispositif (20) est fixé à la barre de maintien (15).

7. Dispositif (20) selon l'une quelconque des revendications précédentes, comprenant en outre un aimant (95) de positionnement de l'appareil électronique (10) par rapport à une bobine électromagnétique (100) d'émission d'un champ électromagnétique du module de chargement par induction (70).

8. Ensemble d'équipements (5) pour un véhicule de transport, comprenant une barre de maintien (15) et un dispositif électronique (20) de chargement électrique d'au moins un appareil électronique (10),
**caractérisé en ce que** le dispositif électronique de chargement (20) est selon l'une quelconque des revendications précédentes.

9. Véhicule de transport, notamment ferroviaire, comprenant au moins un ensemble d'équipements (5) selon la revendication précédente.
